# EUROPEAN PATENT SPECIFICATION

(11) **EP 4 098 485 B1**
(45) Date of publication and mention of the grant of the patent: **03.07.2024**
(21) Application number: 22176200.8
(22) Date of filing: 30.05.2022
(51) Int. Cl.: B60Q 1/00, B60Q 1/04, F21S 41/50, F21S 45/00, B62J 6/026, B62J 6/027, F21S 41/143, F21S 41/255, F21S 43/14, F21S 43/20, F21W 107/17

(54) **HEADLAMP UNIT AND LEANING VEHICLE**
SCHEINWERFEREINHEIT UND NEIGEFAHRZEUG
UNITÉ DE PHARE ET VÉHICULE INCLINABLE

(30) Priority: 31.05.2021 JP 2021090873
(43) Date of publication of application: 07.12.2022
(73) Proprietor: Yamaha Hatsudoki Kabushiki Kaisha, Iwata-shi, Shizuoka 438-8501 (JP)
(72) Inventor: SAGANE, Kazunari, Iwata-shi, Shizuoka, 438-8501 (JP)
(74) Representative: Stöckeler, Ferdinand

(56) References cited:
- EP-A1- 2 269 900
- EP-A1- 2 921 348
- EP-A1- 3 378 745
- EP-A1- 3 782 884
- JP-A- 2013 178 904
- JP-A- 2014 086 214
- JP-A- 2018 078 064
- US-A1- 2020 290 694

## Description

### Technical Field

The present invention relates to a headlamp unit and a leaning vehicle including the headlamp unit.

### Background Art

Leaning vehicles, which are typified by motorcycles, each include a headlamp unit that illuminates an area ahead of the leaning vehicle. Some leaning vehicles have, around the headlamp, another lamp for a different purpose than the headlamp.

For example, Patent Literature (PTL) 1 discloses a leaning vehicle including a headlamp module and position lamp modules. The headlamp module in this leaning vehicle has a main function of providing better visibility of an area ahead for a rider. The headlamp module is disposed around the center of the vehicle in a front view. The position lamp modules have a main function of providing better visibility of the leaning vehicle to others. The position lamp modules are disposed above the headlamp in a front view. The position lamp modules are attached to the vehicle body separately from the headlamp. In addition, Patent Literature (PTL) 2 discloses a rear cover member which is provided forwardly of a front fork unit. A lamp holder that holds a headlamp is attached to the rear cover member. A front cover member is provided forwardly of the rear cover member. A driver for the headlamp is stored in a front cover having the front cover member and the rear cover member. The driver is located at a position farther upward than the headlamp and farther rearward than first and second virtual lines in a side view of a vehicle. The first virtual line extends in a top-and-bottom direction through the rear end of the headlamp in the side view of the vehicle. The second virtual line extends along an axis of the front fork unit in the side view of the vehicle. Further, Patent Literature (PLT) 3 discloses a headlight structure of saddled vehicle. A headlight includes a housing, a low-beam light source and a high-beam light source, a board, and an upper inner lens and a lower inner lens. The low-beam light source and the high-beam light source are each formed of an LED that is housed in the housing and radiates light. The board controls light beams emitted from the low-beam light source and the high-beam light source. The upper inner lens and the lower inner lens are provided in the housing and allow each of the light beams emitted from the low-beam light source and the high-beam light source to be transmitted through the upper inner lens and the lower inner lens toward the vehicle front side. At least part of the board is disposed to overlap with the rear side of the upper inner lens for the low-beam light source.

### Citation List

### Patent Literature

PTL 1: Japanese Patent Application Laid-Open Publication No. 2019-189012
PTL 2: European Patent Application Laid-Open Publication No. 3 782 884 A1
PTL 3: European Patent Application Laid-Open Publication No. 3 378 745 A1

### Summary of Invention

### Technical Problem

The present invention aims to provide a headlamp unit that allows for easy attachment to and detachment from a vehicle body, and easy replacement of modules therein, while suppressing upsizing.

### Solution to the Problem

The present inventor conducted studies about arrangement of a headlamp module and a position lamp module in a leaning vehicle, and came to recognize the above-described aim. In the studies, for example, the following was found. In the leaning vehicle disclosed in PTL 1, the headlamp module is spaced apart from the position lamp modules in a front view. If the headlamp module and the position lamp modules are taken as a single headlamp unit, therefore, the headlamp unit is large in size. Upsizing of the headlamp unit makes it difficult to dispose the headlamp unit in a desired location. That is, the degree of freedom in the attachment of the headlamp unit to a vehicle body is restricted.

In the leaning vehicle disclosed in PTL 1, the headlamp module and the position lamp modules are separately disposed in different locations. When the headlamp unit in this leaning vehicle is entirely replaced, it is necessary to detach and attach the headlamp module and the position lamp modules separately. Thus, the replacement of the headlamp unit requires a great amount of labor and time. In addition, the replacement of the headlamp module and the position lamp modules tends to involve complicated work.

The present inventor further conducted studies to accomplish the above-described aim and found the following. The headlamp unit as a whole in the leaning vehicle disclosed in PTL 1 tends to be large in size because the headlamp module and the position lamp modules are separately provided. The present inventor therefore thought that upsizing of the headlamp unit would be suppressed by adopting a configuration in which a headlamp and another lamp are assembled into a single unit. As long as a headlamp unit can be handled as a single unit, attachment and detachment of the headlamp unit to and from a vehicle body would be easier, and replacement of the entire headlamp unit would be easier. The present inventor also thought that replacement of parts would be made easier while benefits of the suppressed upsizing and easier attachment and detachment of the entire headlamp unit to and from a vehicle body are achieved, by attaching a plurality of lamp modules and other modules included in the headlamp unit to a single member. The present teaching was completed based on such a finding.

The above mentioned problem is solved by the headlamp unit according to claim 1 and by the leaning vehicle according to claim 4. (1) The headlamp unit includes a support member, a headlamp module, a sub-lamp module, and a cover module. The support member has an attachment part configured to be attached to the vehicle body. The headlamp module includes a headlamp LED. The sub-lamp module includes a sub-lamp LED, which is different from the headlamp LED. The cover module covers, in a state in which the headlamp unit is provided to the leaning vehicle, at least a portion of the support member, at least a portion of a non-light emission part of the headlamp module, and at least a portion of a non-light emission part of the sub-lamp module while allowing at least a portion of a light emission part of the headlamp module and at least a portion of a light emission part of the sub-lamp module to be visible from a location in front of the leaning vehicle. The support member is configured to individually support all of the headlamp module, the sub-lamp module, and the cover module so that the support member and each module have no other modules interposed therebetween, wherein the other modules are the headlamp module, the sub damp module, and the cover module, with at least a portion of the attachment part exposed to the outside of the cover module for the attachment of the attachment part of the support member to the vehicle body. Said at least a portion of the light emission part of the headlamp module and said at least a portion of the light emission part of the sub-lamp module are not covered by the cover module and are exposed to the outside of the headlamp unit so that the exposed portions are visible from the location in front of the leaning vehicle.

In the headlamp unit described in (1), the cover module covers the other modules that form the headlamp unit. The modules that form the headlamp unit are attached to a single member referred to as a support member. As such, the modules are not individually attached to the leaning vehicle, but are attached to the leaning vehicle as a single unit. Thus, upsizing of the headlamp unit is suppressed.

This configuration allows the headlamp unit to be handled as a single unit, and thus reduces labor and time for attachment and detachment of the entire headlamp unit. Furthermore, all of the modules are attached to the support member, and each of the modules is detachable from the support member. Thus, when a certain module is replaced, the replacement is performed through easier work.

The headlamp unit is subjected to various forces such as wind pressure, its own weight, and inertial force. It is therefore required that the headlamp unit has a certain level of strength. In a case where each of a plurality of modules is attached to a different member, each of such members is required to have a strength for supporting the corresponding module attached thereto. In this case, each of the members has, for example, an increased thickness or a reinforcing member attached thereto, and thus tends to be larger in size.

By contrast, in the headlamp unit described in (1), the modules are concentratively attached to the support member. In this configuration, the support member is mainly responsible for the strength of the headlamp unit. As long as the support member has a desired level of strength, the strength of the headlamp unit can be maintained or increased even if each of the modules is not reinforced. Thus, upsizing of each module can be suppressed, and as a result, upsizing of the headlamp unit can be further suppressed.

(2) The headlamp unit described in (1) may further include an electric power supply module configured to supply electric power to the headlamp module and/or the sub-lamp module. In this headlamp unit, the support member is configured to individually support the electric power supply module.

In some types of leaning vehicles, the electric power supply module is included in the headlamp unit. In the headlamp unit described in (2), the electric power supply module, like the other modules, is attached to the support member. Thus, even in the case of the headlamp unit including the electric power supply module, upsizing of the headlamp unit can be suppressed. At the same time, attachment and detachment of the headlamp unit to and from the vehicle body, and replacement of the modules can be facilitated.

(3) In the headlamp unit described in (1) or (2), the cover module may include a front cover and a back cover. The front cover covers at least a portion of the non-light emission part of the headlamp module and at least a portion of the non-light emission part of the sub-lamp module while allowing at least a portion of the light emission part of the headlamp module and at least a portion of the light emission part of the sub-lamp module to be visible from a location in front of the leaning vehicle. The back cover is disposed in back of the front cover. The back cover covers at least a portion of the non-light emission part of the headlamp module and at least a portion of the non-light emission part of the sub-lamp module. The support member is configured to support the front cover and the back cover.

In many cases of conventional technology in which the cover module includes a front cover and a back cover, the front cover and the back cover are attached to respective adjacent modules. In some cases, for example, the front cover is attached to the headlamp module. By contrast, in the headlamp unit described in (3), the front cover and the back cover are attached to the support member. Thus, even in the case of the headlamp unit including the front cover and the back cover, upsizing of the headlamp unit can be suppressed. At the same time, attachment and detachment of the headlamp unit to and from the vehicle body, and replacement of the modules can be facilitated.

(4) A leaning vehicle according to the present invention includes the headlamp unit described in any one of (1) to (3).

The "leaning vehicle" is a machine for transport. The leaning vehicle is manned or unmanned. The leaning vehicle is, for example, a straddled vehicle. The straddled vehicle refers to a vehicle whose driver straddles a saddle thereof when seated. The leaning vehicle is, for example, a motorcycle or a motor tricycle. No particular limitations are placed on the motorcycle, and examples thereof include scooters, mopeds, off-road motorcycles, and on-road motorcycles. The straddled vehicle is not limited to motorcycles, and may be, for example, any vehicle such as an ATV (All-Terrain Vehicle). The leaning vehicle is not limited to straddled vehicles, and may be, for example, a three-wheel vehicle or a four-wheel vehicle having a cabin. The leaning vehicle having a cabin may include, for example, a seat for a driver to sit on without straddling the vehicle.

The leaning vehicle is configured to turn with a vehicle body thereof leaning. The leaning vehicle is configured to turn along a curve with a posture thereof leaning toward the inside of the curve in order to counter centrifugal force exerted on the leaning vehicle during the turn. The leaning vehicle may have, for example, two front wheels as steerable wheels. The leaning vehicle may have, for example, one or two rear wheels as drive wheels. The leaning vehicle has, for example, a handlebar. The leaning vehicle is, for example, configured to turn through posture control involving weight shifting of a rider thereon. With respect to the leaning vehicle, there is a strong demand for downsizing of the vehicle. It is therefore preferable to suppress upsizing of a headlamp unit that is mounted to the leaning vehicle.

The "headlamp unit" is attached to a front portion of a leaning vehicle. At least a portion of the headlamp unit is exposed to the outside of the leaning vehicle. The headlamp unit is an assembly of a plurality of modules. No particular limitations are placed on the number of headlamp units provided to one leaning vehicle; the leaning vehicle may be provided with one headlamp unit or a plurality of headlamp units. In a case where the leaning vehicle is provided with a headlamp of two-lamp type, the leaning vehicle may have two headlamp units. The two headlamp units each include one headlamp module. The leaning vehicle may have a single headlamp unit that includes two headlamp modules.

The "headlamp module" has a function of illuminating an area ahead of the leaning vehicle to increase frontward visibility for the rider. One headlamp unit may include one headlamp module or a plurality of headlamp modules.

The "light emission part of the headlamp module" refers to a part through which light from the headlamp LED passes to be emitted to the outside. The light emission part of the headlamp module is, for example, in a front-most location in the headlamp module. The light emission part of the headlamp module is, for example, an outer lens. The light emission part of the headlamp module has, for example, a transparent color. The light emission part of the headlamp module is, for example, disposed on an optical axis of the headlamp LED. At least a portion of the light emission part of the headlamp module is not covered by the cover module and is exposed to the outside of the headlamp unit so that the exposed portion is visible from a location in front of the leaning vehicle.

The "non-light emission part of the headlamp module" refers to a part other than the light emission part described above. The non-light emission part of the headlamp module is completely or substantially uninvolved in the emission of light from the headlamp LED to the outside.

The "headlamp LED" is a light source of a headlamp. The headlamp LED emits, for example, white light. The headlamp LED has, for example, a color temperature of 5,000 to 6,000 K (Kelvin). The headlamp LED has, for example, a luminous intensity of greater than or equal to 15,000 cd (candela).

The "sub-lamp module" may function as, for example, a vehicle visibility lamp. The vehicle visibility lamp has a function of increasing the visibility of the leaning vehicle to others by illuminating at least one of a front region, a left region, or a right region of the leaning vehicle. Examples of vehicle visibility lamps include a daytime running lamp and a position lamp. The vehicle visibility lamp may function either as a daytime running lamp or as a position lamp. The vehicle visibility lamp may function both as a daytime running lamp and as a position lamp. In this case, the leaning vehicle is provided with a switch for switching between the daytime running lamp and the position lamp. The daytime running lamp and the position lamp are examples of the vehicle visibility lamp.

Alternatively, the sub-lamp module may function as, for example, an auxiliary headlamp. The auxiliary headlamp illuminates an area ahead of the leaning vehicle, and thus functions as a complement to the headlamp. Examples of auxiliary headlamps include a fog lamp and a cornering lamp. The fog lamp plays a role as a complement to the headlamp when, for example, the visual range is reduced. The cornering lamp is turned on when the leaning vehicle turns, to illuminate an area in a direction of the turn. One headlamp unit may have one sub-lamp module or a plurality of sub-lamp modules. The plurality of sub-lamp modules may be of the same type or of different types.

The "light emission part of the sub-lamp module" refers to a part through which light from the sub-lamp LED passes to be emitted to the outside. The light emission part of the sub-lamp module is, for example, in a front-most location in the sub-lamp module. The light emission part of the sub-lamp module is, for example, an outer lens. The light emission part of the sub-lamp module has, for example, a transparent color. The light emission part of the sub-lamp module is, for example, disposed on an optical axis of the sub-lamp LED. At least a portion of the light emission part of the sub-lamp module is not covered by the cover module and is exposed to the outside of the headlamp unit so that the exposed portion is visible from a location in front of the leaning vehicle.

The "non-light emission part of the sub-lamp module" refers to a part other than the light emission part described above. The non-light emission part of the sub-lamp module is completely or substantially uninvolved in the emission of light from the sub-lamp LED to the outside.

The "sub-lamp LED" is a light source of a sub-lamp. The sub-lamp LED emits, for example, white light. The sub-lamp LED may emit light other than white light, such as yellow light, depending on the intended use. The sub-lamp LED has, for example, a color temperature of 5,000 to 6,000 K in the case of white light and a color temperature of 2,700 to 3,000 K in the case of yellow light. The sub-lamp LED has, for example, a luminous intensity of less than or equal to 1,200 cd in the case of the daytime running lamp, the fog lamp, or the cornering lamp, and a luminous intensity of less than or equal to 40 cd in the case of the position lamp. The luminous intensity of the sub-lamp LED is lower than the luminous intensity of the headlamp LED.

The "cover module" is a member that covers substantially the entire headlamp module and substantially the entire sub-lamp module. The cover module is, for example, completely or substantially uninvolved in the illumination by the headlamp and the sub-lamp at least in terms of transmission or reflection. The cover module has neither a lens function nor a reflector function. The cover module may be, for example, capable of partially blocking light emitted by the headlamp or the sub-lamp. The headlamp unit can, for example, form a desired illumination area without the cover module. The cover module is made from, for example, a resin. The cover module is, for example, colored and is not transparent.

The "support member" directly supports the headlamp module, the sub-lamp module, and the cover module individually. The support member supports the headlamp module, the sub-lamp module, and the cover module so that the support member and each module have no other modules interposed therebetween. The other modules in this context refer to the headlamp module, the sub-lamp module, and the cover module. For example, the headlamp module is supported on the support member without the interposition of the sub-lamp module or the cover module. The support member is joined to the headlamp module, the sub-lamp module, and the cover module individually, using, for example, screws or adhesives. Other members, such as washers, may be provided between each module and the support member. The support member has, for example, a higher strength than the cover module.

The support member has, for example, an outer circumferential annular portion. The outer circumferential annular portion refers to, for example, a portion that forms an annular shape along the outer circumference of the support member in a front view. The outer circumferential annular portion is, for example, located further outward than outer edges of the headlamp module and the sub-lamp module in a front view. The annular shape is not necessarily limited to a circular ring shape. At least the outer circumferential annular portion of the support member has, for example, a higher strength than the cover module. The outer circumferential annular portion overlaps the headlamp module in a side view, for example. The outer circumferential annular portion is, for example, configured to support both the headlamp module and the sub-lamp module on an inner side of the outer circumferential annular portion, and to support the cover module on a front side and/or a back side of the outer circumferential annular portion. The outer circumferential annular portion has an attachment part. The attachment part is, for example, located further outward than the outer circumferential annular portion. In a configuration in which the cover module includes a front cover and a back cover, the outer circumferential annular portion supports the front cover so that the front cover is located in front of the outer circumferential annular portion, and supports the back cover so that the back cover is located in back of the outer circumferential annular portion. Note that the term "front view" refers to a front view of the leaning vehicle having the headlamp unit provided thereto. Note that the term "side view" refers to a side view of the leaning vehicle having the headlamp unit provided thereto.

The above and other aims, features, aspects, and advantages of the present invention will become more apparent from the following detailed description of some embodiments of the present invention given with reference to the accompanying drawings.

As used herein, the term "and/or" includes any and all combinations of one or more of the associated listed items. As used herein, the terms "including", "comprising", or "having", and variations thereof specify the presence of stated features, steps, operations, elements, components, and/or equivalents thereof, and can include one or more of steps, operations, elements, components, and/or their groups.

In the description given below, for the purposes of explanation, numerous specific details are set forth in order to provide a thorough understanding of the present invention. It will be apparent, however, that those skilled in the art may practice the present invention without these specific details.

The present invention is limited only by the appended claims.

### Advantageous Effects of Invention

The present invention allows for easy attachment and detachment of a headlamp to and from a vehicle body, and easy replacement of modules, while suppressing upsizing of the headlamp.

### Brief Description of Drawings

[FIG. 1(a)] A side view of a leaning vehicle according to an embodiment.
[FIG. 1(b)] A perspective view of a headlamp unit according to the embodiment.
[FIG. 1(c)] An exploded perspective view of the headlamp unit according to the embodiment.
[FIG. 2] A cross-sectional view of the headlamp unit according to the embodiment as taken through a plane along an up-down direction and a front-back direction.
[FIG. 3] An exploded view of a sub-lamp module.
[FIG. 4] A front view of the headlamp unit according to the embodiment.
[FIG. 5] An exploded perspective view of the headlamp unit according to the embodiment as seen in a different direction from FIG. 1(c).
[FIG. 6] A perspective view of a support member.
[FIG. 7] Aback view of the support member, a headlamp module, and a connector module.
[FIG. 8] An oblique bottom-side view of the support member and the headlamp module in FIG. 7.

### Description of Embodiments

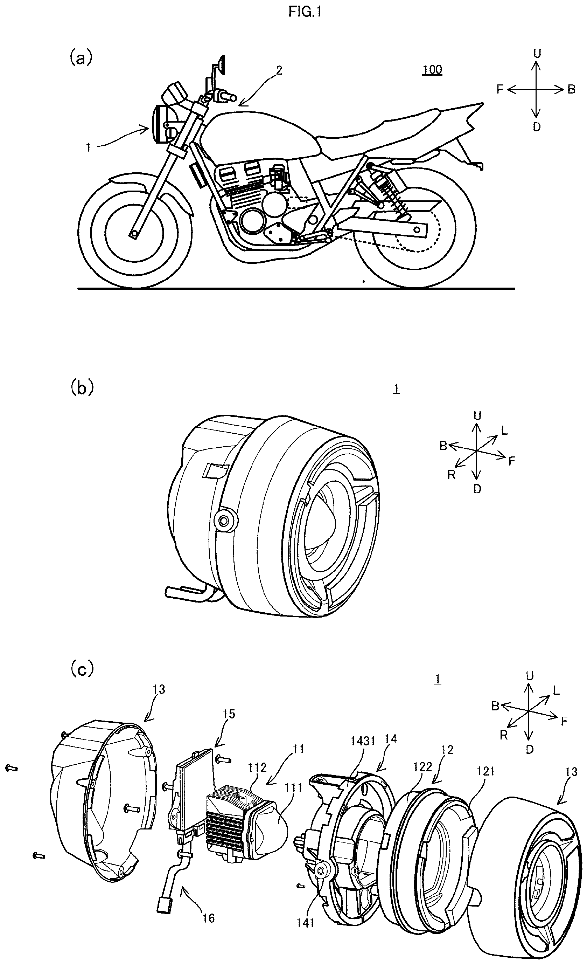

Referring to FIGS. 1(a) to 1(c), the following schematically describes a leaning vehicle and a headlamp unit according to an embodiment of the present invention.

FIG. 1(a) is a side view of the leaning vehicle according to the present embodiment. A leaning vehicle 100 is, for example, a motorcycle. The leaning vehicle 100 includes a headlamp unit 1 and a vehicle body 2. The headlamp unit 1 is attached to a front portion of the leaning vehicle 100. The headlamp unit 1 is, for example, attached to the vehicle body 2 with a bracket therebetween. At least a portion of the headlamp unit 1 is exposed to the outside of the leaning vehicle 100.

FIG. 1(b) is a perspective view of the headlamp unit according to the present embodiment. The headlamp unit 1 has, for example, a substantially cannonball-like shape. The headlamp unit 1 is a single unit composed of a combination of a plurality of modules. The headlamp unit 1 is attachable to and detachable from the leaning vehicle 100 as a single unit without the need to remove any of the modules.

FIG. 1(c) is an exploded perspective view of the headlamp unit according to the present embodiment. The headlamp unit 1 includes a headlamp module 11, a sub-lamp module 12, a cover module 13, a support member 14, an electric power supply module 15, and a connector module 16.

The headlamp module 11 has a substantially box-like shape. The headlamp module 11 includes a light emission part 111, a non-light emission part 112, and a headlamp LED.

The light emission part 111 forms a front face of the headlamp module 11. The light emission part 111 emits light from the headlamp LED in a front direction F of the leaning vehicle 100. The non-light emission part 112 is a part of the headlamp module 11 other than the light emission part 111. The non-light emission part 112 forms top, bottom, left, right, and back faces of the headlamp module 11.

The headlamp LED is contained in a casing, and the interior of the casing is substantially sealed. That is, the headlamp module 11 has a waterproof structure. The waterproof structure refers to a structure that protects an object from liquid, such as water, entering so that no function of the object is compromised. By contrast, a non-waterproof structure, which is described below, refers to any structure other than the waterproof structure described above.

The sub-lamp module 12 has a substantially annular shape in a front view. The sub-lamp module 12 includes a light emission part 121, a non-light emission part 122, and a sub-lamp LED, which is different from the headlamp LED.

The light emission part 121 forms a front face of the sub-lamp module 12. The light emission part 121 emits light from the sub-lamp LED in the front direction F and/or a radial direction of the leaning vehicle 100. The non-light emission part 122 is a part of the sub-lamp module 12 other than the light emission part 121. The non-light emission part 122 forms inner and outer circumferential surfaces and a back face of the sub-lamp module 12.

The sub-lamp LED is contained in a casing, and the interior of the casing is substantially sealed. That is, the sub-lamp module 12 has a waterproof structure.

The cover module 13 has a substantially circular cylindrical box-like shape. The cover module 13 covers at least a portion of the support member 14, at least a portion of the non-light emission part 112 of the headlamp module 11, and at least a portion of the non-light emission part 122 of the sub-lamp module 12. In such a state, at least a portion of the light emission part 111 of the headlamp module 11 and at least a portion of the light emission part 121 of the sub-lamp module 12 are visible from a location in front of the leaning vehicle 100. The cover module 13 has a non-waterproof structure.

The support member 14 has an attachment part 141 to be attached to the vehicle body 2. The support member 14 has an outer circumferential annular portion 1431. The outer circumferential annular portion 1431 has the attachment part 141. The outer circumferential annular portion 1431 is configured to allow the headlamp module 11 and the sub-lamp module 12 to be located within the outer periphery of the outer circumferential annular portion 1431 in a front view. The support member 14 is configured to expose at least a portion of the attachment part 141 to the outside of the cover module 13 for the attachment of the attachment part 141 to the vehicle body 2. The support member 14 individually supports all of the headlamp module 11, the sub-lamp module 12, the cover module 13, and the electric power supply module 15.

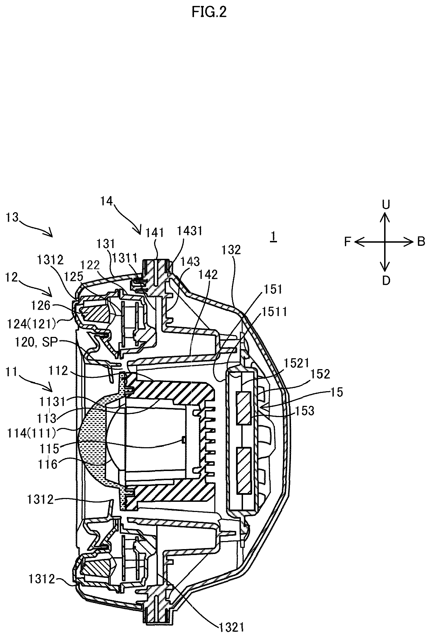

The following describes the headlamp unit 1 according to the present embodiment in more detail. FIG. 2 is a cross-sectional view of the headlamp unit as taken through a plane along an up-down direction UD and a front-back direction FB. Note that the up-down direction UD, the front-back direction FB, and a left-right direction LR are defined with reference to the leaning vehicle 100 in an upright state with the headlamp unit 1 mounted thereto.

The headlamp module 11 includes a housing 113, an outer lens 114, a headlamp LED 115, and an inner lens 116.

The housing 113 has a substantially box-like shape having an opening part 1131 in a front face thereof. More specifically, the housing 113 has a substantially hat-like shape in a cross-sectional view along the up-down direction UD and the front-back direction FB. The housing 113 is an example of the non-light emission part 112 of the headlamp module 11.

The outer lens 114 is disposed in front of the housing 113 in the front direction F. The outer lens 114 has a substantially dome-like shape. The outer lens 114 is, for example, a plano-convex lens. The outer lens 114 is disposed with a convex surface thereof facing in the front direction F. The outer lens 114 is an example of the light emission part 111 of the headlamp module 11. The outer lens 114 is attached to the housing 113 using, for example, screws or adhesives. The outer lens 114, together with the housing 113, forms the casing. The interior of this casing is substantially sealed, so that the casing has a waterproof structure. The headlamp LED 115 and the inner lens 116 are contained inside the casing.

The headlamp LED 115 is attached to a substrate, which is not shown. The headlamp LED 115 is disposed with an emission surface thereof facing in the front direction F. The headlamp LED 115 emits, for example, white light in the front direction F. The headlamp LED 115 has, for example, a color temperature of 5,000 K. The headlamp LED 115 has, for example, a luminous intensity of 20,000 cd.

The inner lens 116 is disposed between the headlamp LED 115 and the outer lens 114. The inner lens 116 is, for example, a plano-convex lens. The inner lens 116 is disposed with a convex surface thereof facing in the front direction F. The inner lens 116, together with the outer lens 114, collects light emitted from the headlamp LED 115 to form a desired illumination area.

The sub-lamp module 12 is disposed to surround the headlamp module 11. The sub-lamp module 12 has a cavity part 120 around the center thereof. The headlamp module 11 is disposed in the cavity part 120. More specifically, the sub-lamp module 12 surrounds, for example, the outer lens 114 of the headlamp module 11. The sub-lamp module 12 and the headlamp module 11 have a space SP therebetween. The space SP spans the entire perimeter of the headlamp module 11 in a front view.

According to the present embodiment, the sub-lamp module 12 functions as a daytime running lamp and a position lamp. A selector switch, which is not shown, controls switching of the sub-lamp module 12 between functioning as a daytime running lamp and functioning as a position lamp. The selector switch is, for example, provided on a steering of the leaning vehicle 100.

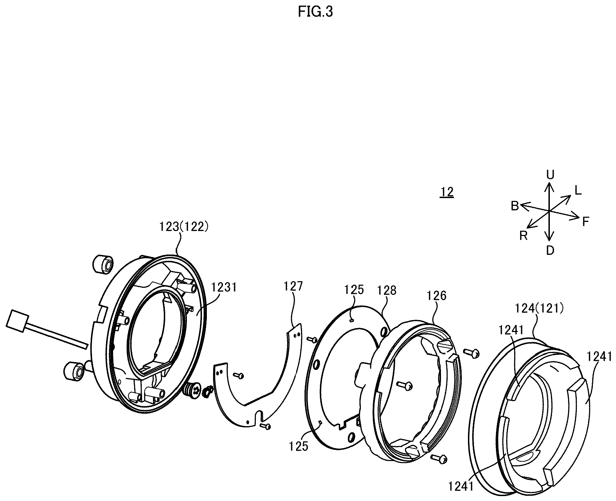

FIG. 3 is an exploded view of the sub-lamp module. The sub-lamp module 12 includes a housing 123, an outer lens 124, sub-lamp LEDs 125, an inner lens 126, a control board 127, and an LED substrate 128.

The housing 123 has a substantially annular shape having an opening part 1231 in a front face thereof. The annular shape of the housing 123 is a substantially hat-like shape in a cross-sectional view along the up-down direction UD and the front-back direction FB. The housing 123 is an example of the non-light emission part 122 of the sub-lamp module 12.

The outer lens 124 is disposed in front of the housing 123 in the front direction F. The outer lens 124 has a substantially hollow cylindrical shape having an opening part (not shown) in a back face thereof. The outer lens 124 has a transparent color as a whole. The outer lens 124 is an example of the light emission part 121 of the sub-lamp module 12. The outer lens 124 includes a plurality of lens parts 1241 at a front face thereof. The plurality of lens parts 1241 are arranged at regular intervals and project in the front direction F. The plurality of lens parts 1241 are, for example, plano-convex lenses. The plurality of lens parts 1241 are each disposed with a convex surface thereof facing in the front direction F. The outer lens 124 is attached to the housing 123 using, for example, screws or adhesives. The outer lens 124, together with the housing 123, forms the casing. The interior of this casing is substantially sealed, so that the casing has a waterproof structure. The control board 127, the sub-lamp LEDs 125, the inner lens 126, and the LED substrate 128 are contained inside the casing.

The control board 127 is attached to the housing 123. The control board 127 is electrically connected to a power source device such as a battery, which is not shown, and connected to the LED substrate 128. The control board 127 supplies electric power to the sub-lamp LEDs 125. The control board 127 adjusts the luminous intensity of the sub-lamp LEDs 125 in response to a signal from the selector switch, which is not shown. The LED substrate 128 and the sub-lamp LEDs 125 are disposed in front of the control board 127 in the front direction F.

The sub-lamp LEDs 125 are attached to the LED substrate 128. The sub-lamp LEDs 125 are each disposed with an emission surface thereof facing in the front direction F. The sub-lamp LEDs 125 emit, for example, white light in the front direction F. The sub-lamp LEDs 125 have, for example, a color temperature of 5,000 K. The sub-lamp LEDs 125 have, for example, a luminous intensity of 1,000 cd in the case of the daytime running lamp and a luminous intensity of 30 cd in the case of the position lamp.

The inner lens 126 is disposed between the sub-lamp LEDs 125 and the outer lens 124. The inner lens 126 has a substantially hollow cylindrical shape. The inner lens 126 has, for example, the same shape as a substantially plano-convex lens.

Referring to FIG. 2, the inner lens 126 is disposed with a convex surface thereof facing in the back direction B. That is, the convex surface is a light receiving surface that receives light from the sub-lamp LEDs 125. A front surface of the inner lens 126 is an emission surface. The front surface of the inner lens 126 has a staircase shape having a height that decreases toward a central axis of the sub-lamp module 12. In the inner lens 126, the area of the light receiving surface is larger than the area of the emission surface. That is, the inner lens 126 has a tapered shape having a thickness that decreases in the front direction F. The inner lens 126, together with the outer lens 124, collects light emitted from the sub-lamp LEDs 125 to form a desired illumination area.

The cover module 13 includes a front cover 131 and a back cover 132.

The front cover 131 has a substantially cylindrical box-like shape having an opening part 1311 in a back face thereof. The front cover 131 covers at least a portion of the non-light emission part 112 of the headlamp module 11 and at least a portion of the non-light emission part 122 of the sub-lamp module 12. More specifically, the front cover 131 covers the left, right, top, bottom, and front faces of the headlamp module 11, but does not cover the back face of the headlamp module 11. The front cover 131 covers the circumferential surfaces and the front face of the sub-lamp module 12, but does not cover the back face of the sub-lamp module 12.

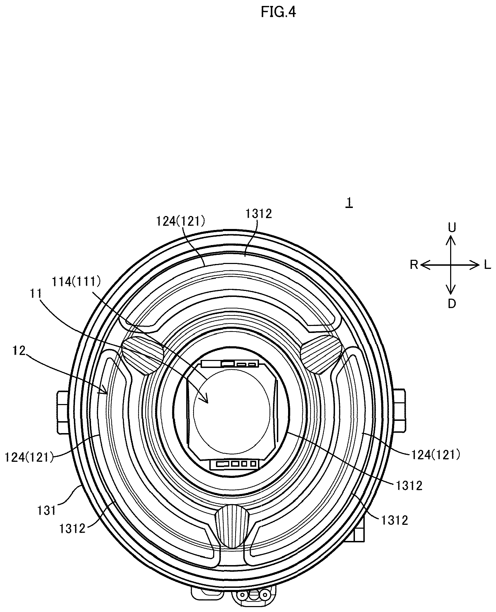

FIG. 4 is a front view of the headlamp unit according to the present embodiment. The front cover 131 has a plurality of opening parts 1312 in a front face thereof. In a front view of the headlamp unit 1, the outer lens 114 of the headlamp module 11 and the outer lens 124 of the sub-lamp module 12 are disposed in the plurality of opening parts 1312. That is, the front cover 131 does not cover at least a portion of the light emission part 111 of the headlamp module 11 or at least a portion of the light emission part 121 of the sub-lamp module 12. Thus, at least a portion of the light emission part 111 of the headlamp module 11 and at least a portion of the light emission part 121 of the sub-lamp module 12 are visible from a location in front of the leaning vehicle 100.

Referring to FIG. 2, the back cover 132 is disposed in back of the front cover 131 in the back direction B. The back cover 132 has a substantially cylindrical box-like shape having an opening part 1321 in a front face thereof. The back cover 132, together with the front cover 131, covers at least a portion of the non-light emission part 112 of the headlamp module 11 and at least a portion of the non-light emission part 122 of the sub-lamp module 12. More specifically, the back cover 132 and the front cover 131 cover a portion other than the front face of the headlamp module 11 and a portion other than the front face of the sub-lamp module 12.

The electric power supply module 15 is disposed in back of the headlamp module 11 in the back direction B. The electric power supply module 15 includes a front case 151, a back case 152, and a control board 153.

The front case 151 has a substantially box-like shape having an opening part 1511 in a back face thereof. More specifically, the front case 151 has a substantially hat-like shape in a cross-sectional view along the up-down direction UD and the front-back direction FB.

The back case 152 is disposed in back of the front case 151 in the back direction B. The back case 152 has a substantially box-like shape having an opening part 1521 in a front face thereof. More specifically, the back case 152 has a substantially hat-like shape in a cross-sectional view along the up-down direction UD and the front-back direction FB. The back case 152 is attached to the front case 151 using, for example, screws or adhesives.

The back case 152, together with the front case 151, forms a casing. The interior of this casing is substantially sealed, so that the casing has a waterproof structure. The control board 153 is contained inside the casing.

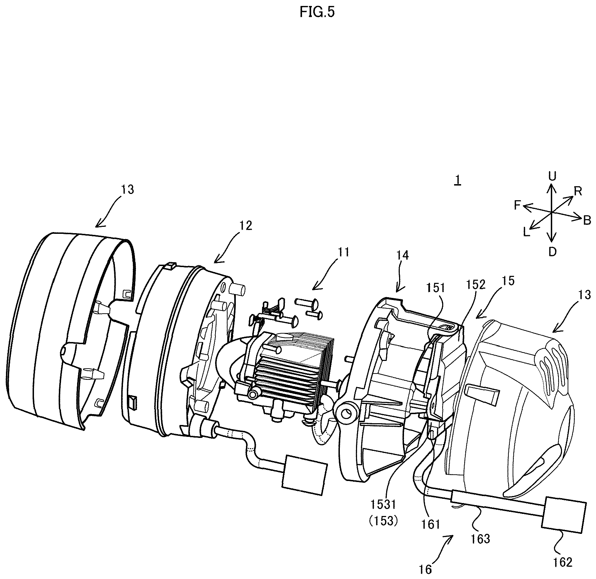

FIG. 5 is an exploded perspective view of the headlamp unit according to the present embodiment as seen in a different direction from FIG. 1(c). The control board 153 is connected to a power source device such as a battery, which is not shown, and supplies electric power to the headlamp module 11. An insertion port 1531 is provided in a lower portion of the control board 153. The insertion port 1531 protrudes from the inside to the outside of the casing formed by the front case 151 and the back case 152. The connector module 16 is connected to the insertion port 1531.

The connector module 16 includes two connector bodies 161 and 162, and a wire 163.

The connector body 161 is inserted into the insertion port 1531 of the control board 153. The connector body 162 is connected to a power source device, which is not shown, of the leaning vehicle 100 or to a relay device, which is not shown, connected to the power source device. The wire 163 connects the connector body 161 and the connector body 162 together. The wire 163 is covered with a covering material such as vinyl chloride.

An area of connection between the connector body 161 and the insertion port 1531 is covered with, for example, a silicone material. The area of connection may be covered with a waterproof covering material such as vinyl chloride. That is, the connector module 16 has a waterproof structure for preventing effects on energization.

The headlamp module 11, the sub-lamp module 12, the electric power supply module 15, and the cover module 13 described above are each attached to the support member 14.

Referring to FIG. 2, the support member 14 is disposed in the back of the sub-lamp module 12 in the back direction B and in front of the back cover 132 in the front direction F. The support member 14 directly supports the headlamp module 11, the sub-lamp module 12, the electric power supply module 15, and the cover module 13. The support member 14 includes a cylindrical part 142 and a disk part 143.

The cylindrical part 142 has a substantially hollow cylindrical shape. At least a portion of the headlamp module 11 is disposed inside the cylindrical part 142.

The disk part 143 has a substantially disk-like shape having a hole in a central portion thereof. An inner circumferential surface of the disk part 143 is connected to an outer circumferential surface of the cylindrical part 142. That is, the support member 14 has a shape in which the cylindrical part 142 is fitted into the hole of the disk part 143. The disk part 143 is integral with the cylindrical part 142.

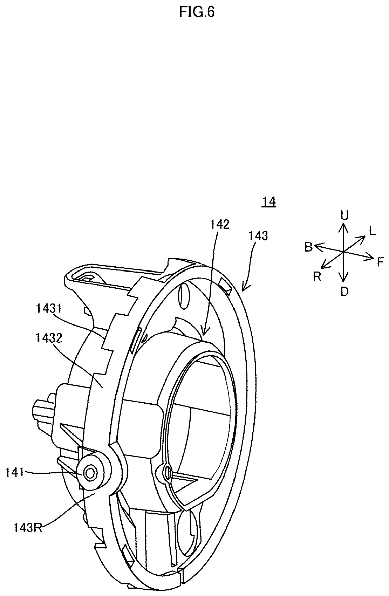

FIG. 6 is a perspective view of the support member. The outer circumferential annular portion 1431 of the disk part 143 is thicker than any other portions thereof in the front-back direction FB. A circumferential surface of the outer circumferential annular portion 1431, which in other words is an outer circumferential surface 1432 of the disk part 143, is provided with a plurality of attachment parts 141. FIG. 6 shows only one attachment part 141 provided in a right end region 143R of the outer circumferential surface 1432. However, another attachment part 141 is also provided in a left end region, which is not shown, of the outer circumferential surface 1432. The left end region is symmetrical to the right end region 143R with respect to the up-down direction UD passing through the center of the disk part 143. The plurality of attachment parts 141 protrude from the outer circumferential surface 1432. The plurality of attachment parts 141 are, for example, solid cylindrical bosses. The attachment parts 141 are, for example, each attached to the vehicle body 2 with a bracket therebetween.

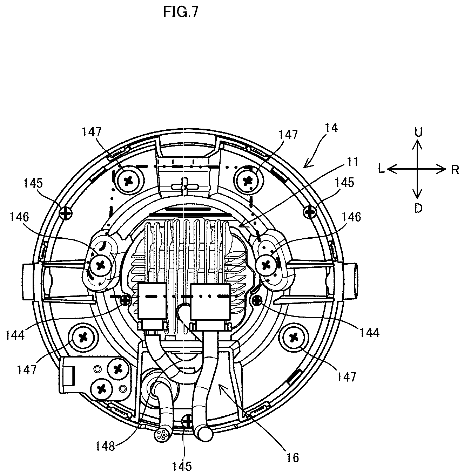

FIG. 7 is a back view of the support member, the headlamp module, and the connector module. The support member 14 further includes a plurality of cover module attachment parts 144 and 145, a plurality of electric power supply module attachment parts 146, a plurality of sub-lamp module attachment parts 147, and a plurality of headlamp module attachment parts 148.

The cover module 13 is attached to the plurality of cover module attachment parts 144 and 145. More specifically, the front cover 131 is attached to the plurality of cover module attachment parts 144. The plurality of cover module attachment parts 144 are, for example, provided on the inner circumferential surface of the disk part 143. In the back view, the plurality of cover module attachment parts 144 are, for example, provided symmetrically to each other with respect to the up-down direction UD passing through the center of the disk part 143. The back cover 132 is attached to the plurality of cover module attachment parts 145. The plurality of cover module attachment parts 145 are, for example, provided on the outer circumferential annular portion 1431 of the disk part 143. In the back view, the plurality of cover module attachment parts 145 are, for example, arranged at regular intervals in a circumferential direction of the disk part 143.

The electric power supply module 15 is attached to the plurality of electric power supply module attachment parts 146. The plurality of electric power supply module attachment parts 146 are, for example, provided on a back surface of the disk part 143. In the back view, the plurality of electric power supply module attachment parts 146 are, for example, provided symmetrically to each other with respect to the up-down direction UD passing through the center of the disk part 143.

The sub-lamp module 12 is attached to the plurality of sub-lamp module attachment parts 147. The plurality of sub-lamp module attachment parts 147 are, for example, provided on the back surface of the disk part 143. In the back view, the plurality of sub-lamp module attachment parts 147 are, for example, arranged at regular intervals in the circumferential direction of the disk part 143.

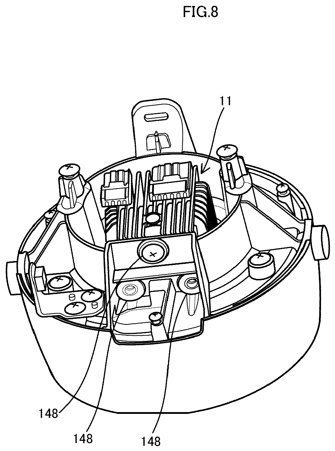

FIG. 8 is an oblique bottom-side view of the support member and the headlamp module in FIG. 7. The headlamp module 11 is attached to the plurality of headlamp module attachment parts 148. The plurality of headlamp module attachment parts 148 are, for example, provided in a lower end region of the disk part 143. The plurality of headlamp module attachment parts 148 are, for example, arranged in a triangle in a bottom view.

In one example, the cover module attachment parts 144 and 145, the electric power supply module attachment parts 146, the sub-lamp module attachment parts 147, and the headlamp module attachment parts 148 are each a screw hole. Each attachment part receives fastening of a member of the corresponding module with a screw.

In the headlamp unit 1 according to the present embodiment, the front cover 131 and the back cover 132 cover the headlamp module 11, the sub-lamp module 12, the electric power supply module 15, and the support member 14. The modules that form the headlamp unit 1 are centrally attached to the support member 14. The headlamp unit 1 can be handled as a single unit. This configuration allows the modules to be disposed in close proximity to each other, suppressing upsizing of the headlamp unit 1.

Since the headlamp unit 1 can be handled as a single unit, the entire headlamp unit 1 can be attached to or detached from the leaning vehicle 100 at once. Thus, this configuration reduces labor and time for replacement of the entire headlamp unit 1. Furthermore, all of the modules are detachable from the support member 14. Thus, when a certain module is replaced, the replacement is performed through easier work.

In a case where a member A is attached to a member C with a member B therebetween, the positional accuracy of the member C relative to the member A tends to decrease due to tolerances for attachment stacking up. By contrast, in the headlamp unit 1, all of the modules are directly attached to the support member 14. Thus, this configuration prevents the attachment tolerance stack-up, allowing for high positional accuracy of each module in the headlamp unit 1.

In the case of the embodiment described above, the headlamp unit 1 includes the electric power supply module 15. However, the headlamp unit 1 does not have to include the electric power supply module 15. In this case, the electric power supply module 15 is, for example, attached to the vehicle body 2.

In the case of the embodiment described above, the headlamp unit 1 includes a single sub-lamp module 12. However, the headlamp unit 1 may include a plurality of sub-lamp modules 12. In this case, for example, the plurality of sub-lamp modules 12 are arranged at regular intervals to surround the headlamp module 11 in a front view.

### Reference Signs List

- 100: leaning vehicle
- 1: headlamp unit
- 11: headlamp module
- 111: light emission part
- 112: non-light emission part
- 113: housing
- 1131: opening part
- 114: outer lens
- 115: LED
- 116: inner lens
- 12: sub-lamp module
- 120: cavity part
- 121: light emission part
- 122: non-light emission part
- 123: housing
- 1231: opening part
- 124: outer lens
- 1241: lens part
- 125: LED
- 126: inner lens
- 127: control board
- 128: LED substrate
- 13: cover module
- 131: front cover
- 1311: opening part
- 1312: opening part
- 132: back cover
- 1321: opening part
- 14: support member
- 141: attachment part
- 142: cylindrical part
- 143: disk part
- 1431: outer circumferential annular portion
- 1432: outer circumferential surface
- 143R: right end region
- 144: cover module attachment part
- 145: cover module attachment part
- 146: electric power supply module attachment part
- 147: sub-lamp module attachment part
- 148: headlamp module attachment part
- 15: electric power supply module
- 151: front case
- 1511: opening part
- 152: back case
- 1521: opening part
- 153: control board
- 1531: insertion port
- 16: connector module
- 161: connector body
- 162: connector body
- 163: wire
- 2: vehicle body
- SP: space

## Claims

1. A headlamp unit (1) for attachment to a vehicle body (2) of a leaning vehicle (100), the headlamp unit (1) comprising:
a support member (14) having an attachment part (141) configured to be attached to the vehicle body (2);
a headlamp module (11) including a headlamp LED (115);
a sub-lamp module (12) including a sub-lamp LED (125), which is different from the headlamp LED (115); and
a cover module (13) configured to cover, in a state in which the headlamp unit (1) is provided to the leaning vehicle (100), at least a portion of the support member (14), at least a portion of a non-light emission part (112) of the headlamp module (11), and at least a portion of a non-light emission part (122) of the sub-lamp module (12) while allowing at least a portion of a light emission part (111) of the headlamp module (11) and at least a portion of a light emission part (121) of the sub-lamp module (12) to be visible from a location in front of the leaning vehicle (100), wherein
the support member (14) is configured to individually support all of the headlamp module (11), the sub-lamp module (12), and the cover module (13) so that the support member (14) and each module have no other modules interposed therebetween, wherein the other modules are the headlamp module (11), the sub-lamp module (12), and the cover module (13), with at least a portion of the attachment part (141) exposed to the outside of the cover module (13) for the attachment of the attachment part (141) of the support member (14) to the vehicle body (2),
**characterized in that**
said at least a portion of the light emission part (111) of the headlamp module (11) and said at least a portion of the light emission part (121) of the sub-lamp module (12) are not covered by the cover module (13) and are exposed to the outside of the headlamp unit (1) so that the exposed portions are visible from the location in front of the leaning vehicle (100).

2. The headlamp unit (1) according to claim 1, further comprising
an electric power supply module (15) configured to supply electric power to the headlamp module (11) and/or the sub-lamp module (12), wherein
the support member (14) is configured to individually support the electric power supply module (15).

3. The headlamp unit (1) according to claim 1 or 2, wherein
the cover module (13) includes
a front cover (131) configured to cover at least a portion of the non-light emission part (112) of the headlamp module (11) and at least a portion of the non-light emission part (122) of the sub-lamp module (12) while allowing at least a portion of the light emission part (111) of the headlamp module (11) and at least a portion of the light emission part (121) of the sub-lamp module (12) to be visible from a location in front of the leaning vehicle (100), and
a back cover (132) disposed in back of the front cover (131) and configured to, together with the front cover (131), cover at least a portion of the non-light emission part (112) of the headlamp module (11) and at least a portion of the non-light emission part (122) of the sub-lamp module (12), and
the support member (14) is configured to support the front cover (131) and the back cover (132).

4. A leaning vehicle (100) comprising the headlamp unit (1) according to any one of claims 1 to 3.

## Patentansprüche

1. Eine Scheinwerfereinheit (1) zum Anbringen an einen Fahrzeugkörper (2) eines Neigungsfahrzeugs (100), wobei die Scheinwerfereinheit (1) folgende Merkmale aufweist:
ein Trägerbauglied (14), das ein Anbringungsteil (141) aufweist, das dazu konfiguriert ist, an dem Fahrzeugkörper (2) angebracht zu sein;
ein Scheinwerfermodul (11), das eine Scheinwerfer-LED (115) aufweist;
ein Teillampenmodul (12), das eine Teillampen-LED (125) umfasst, die sich von der Scheinwerfer-LED (115) unterscheidet, und
ein Abdeckungsmodul (13), das dazu konfiguriert ist, in einem Zustand, in dem das Neigungsfahrzeug (100) mit der Scheinwerfereinheit (1) versehen ist, zumindest einen Abschnitt des Trägerbauglieds (14), zumindest einen Abschnitt eines nicht lichtemittierenden Teils (112) des Scheinwerfermoduls (11) und zumindest einen Abschnitt eines nicht lichtemittierenden Teils (122) des Teillampenmoduls (12) abzudecken, während es dasselbe ermöglicht, dass zumindest ein Abschnitt eines lichtemittierenden Teils (111) des Scheinwerfermoduls (11) und zumindest ein Abschnitt eines lichtemittierenden Teils (121) des Teillampenmoduls (12) von einer Stelle vor dem Neigungsfahrzeug (100) sichtbar sind, wobei
das Trägerbauglied (14) dazu konfiguriert ist, alle des Scheinwerfermoduls (11), des Teillampenmoduls (12) und des Abdeckungsmoduls (13) individuell zu tragen, sodass zwischen dem Trägerbauglied (14) und jedem Modul keine anderen Module eingefügt sind, wobei die anderen Module das Scheinwerfermodul (11), das Teillampenrnodul (12) und das Abdeckungsmodul (13) sind, wobei zumindest ein Abschnitt des Anbringungsteils (141) zur Außenseite des Abdeckungsmoduls (13) hin freigelegt ist, um das Anbringungsteil (141) des Trägerbauglieds (14) an dem Fahrzeugkörper (2) anzubringen,
**dadurch gekennzeichnet, dass**
der zumindest eine Abschnitt des lichtemittierenden Teils (111) des Scheinwerfermoduls (11) und der zumindest eine Abschnitt des lichtemittierenden Teils (121) des Teillampenmoduls (12) nicht von dem Abdeckungsmodul (13) abgedeckt sind und zu der Außenseite der Scheinwerfereinheit (1) hin freigelegt sind, sodass die freiliegenden Abschnitte von der Stelle vor dem Neigungsfahrzeug (100) sichtbar sind.

2. Die Scheinwerfereinheit (1) gemäß Anspruch 1, die ferner folgende Merkmale aufweist:
ein Elektrische-Leistungsversorgung-Modul (15), das dazu konfiguriert ist, das Scheinwerfermodul (11) und/oder das Teillampenmodul (12) mit elektrischer Leistung zu versorgen, wobei
das Trägerbauglied (14) dazu konfiguriert ist, das Elektrische-Leistungsversorgung-Modul (15) individuell zu tragen.

3. Das Scheinwerfermodul (1) gemäß Anspruch 1 oder 2, bei dem
das Abdeckungsmodul (13) folgende Merkmale umfasst:
eine vordere Abdeckung (131), die dazu konfiguriert ist, zumindest einen Abschnitt des nicht lichtemittierenden Teils (112) des Scheinwerfermoduls (11) und zumindest einen Abschnitt des nicht lichtemittierenden Teils (122) des Teillampenmodules (12) abzudecken, während es dasselbe ermöglicht, dass zumindest ein Abschnitt des lichtemittierenden Teils (111) des Scheinwerfermoduls (11) und zumindest ein Abschnitt des lichtemittierenden Teils (121) des Teillampenmoduls (12) von einer Stelle vor dem Neigungsfahrzeug (100) sichtbar ist, und
eine hintere Abdeckung (132), die hinter der vorderen Abdeckung (131) angeordnet ist und die dazu konfiguriert ist, zusammen mit der vorderen Abdeckung (131) zumindest einen Abschnitt des nicht lichtemittierenden Teils (112) des Scheinwerfermoduls (11) und zumindest einen Abschnitt des nicht lichtemittierenden Teils (122) des Teillampenmoduls (12) abzudecken, und das Trägerbauglied (14) dazu konfiguriert ist, die vordere Abdeckung (131) und die hintere Abdeckung (132) zu tragen.

4. Ein Neigungsfahrzeug (100), das die Scheinwerfereinheit (1) gemäß einem der Ansprüche 1 bis 3 aufweist.

## Revendications

1. Unité de phare (1) destinée à être fixée à une carrosserie de véhicule (2) d'un véhicule à inclinaison (100), l'unité de phare (1) comprenant:
un élément de support (14) présentant une partie de fixation (141) configurée pour être fixée à la carrosserie de véhicule (2);
un module de phare (11) comportant une LED de phare (115);
un sous-module de phare (12) comportant une LED de sous-phare (125) qui est différente de la LED de phare (115); et
un module de couvercle (13) configuré pour recouvrir, dans un état dans lequel l'unité de phare (1) est prévue sur le véhicule à inclinaison (100), au moins une partie de l'élément de support (14), au moins une portion d'une partie n'émettant pas de lumière (112) du module de phare (11), et au moins une portion d'une partie n'émettant pas de lumière (122) du sous-module de phare (12), tout en permettant à au moins une portion d'une partie d'émission de lumière (111) du sous-module de phare (11) et au moins une portion d'une partie d'émission de lumière (121) du sous-module de phare (12) d'être visibles depuis un emplacement devant le véhicule à inclinaison (100),
dans laquelle
l'élément de support (14) est configuré pour supporter individuellement l'ensemble du module de phare (11), du sous-module de phare (12) et du module de couvercle (13) de sorte que l'élément de support (14) et chaque module ne présentent pas d'autre modules interposés entre eux, où les autres modules sont le module de phare (11), le sous-module de phare (12) et le module de couvercle (13), avec au moins une portion de la partie de fixation (141) exposée à l'extérieur du module de couvercle (13) pour la fixation de la partie de fixation (141) de l'élément de support (14) à la carrosserie de véhicule (2),
**caractérisée par le fait que**
ladite au moins une portion de la partie d'émission de lumière (111) du module de phare (11) et ladite au moins une portion de la partie d'émission de lumière (121) du sous-module de phare (12) ne sont pas recouvertes par le module de couvercle (13) et sont exposées à l'extérieur de l'unité de phare (1) de sorte que les parties exposées soient visibles depuis l'emplacement devant le véhicule à inclinaison (100).

2. Unité de phare (1) selon la revendication 1, comprenant par ailleurs
un module d'alimentation de courant électrique (15) configuré pour alimenter du courant électrique vers le module de phare (11) et/ou vers le module de sous-phare (12),
dans laquelle
l'élément de support (14) est configuré pour supporter individuellement le module d'alimentation de courant électrique (15).

3. Unité de phare (1) selon la revendication 1 ou 2, dans laquelle le module de couvercle (13) comporte
un couvercle avant (131) configuré pour recouvrir au moins une portion de la partie n'émettant pas de lumière (112) du module de phare (11) et au moins une partie de la partie n'émettant pas de lumière (122) du sous-module de phare (12) tout en permettant à au moins une portion de la partie d'émission de lumière (111) du module de phare (11) et au moins une portion de la partie d'émission de lumière (121) du sous-module de phare (12) d'être visibles depuis un emplacement devant le véhicule à inclinaison (100), et
un couvercle arrière (132) disposé à l'arrière du couvercle avant (131) et configuré pour recouvrir, ensemble avec le couvercle avant (131), au moins une portion de la partie n'émettant pas de lumière (112) du module de phare (11) et au moins une portion de la partie n'émettant pas de lumière (122) du sous-module de phare (12), et
l'élément de support (14) est configuré pour supporter le couvercle avant (131) et le couvercle arrière (132).

4. Véhicule à inclinaison (100) comprenant l'unité de phare (1) selon l'une quelconque des revendications 1 à 3.
